# EUROPEAN PATENT SPECIFICATION

(11) **EP 3 324 045 B1**
(45) Date of publication and mention of the grant of the patent: **05.12.2018**
(21) Application number: 17158142.4
(22) Date of filing: 27.02.2017
(51) Int. Cl.: F04B 11/00, F04B 17/02, F04B 53/10, F03C 1/04, F03C 1/26

(54) **HYDRAULIC MACHINE AND RENEWABLE ENERGY TYPE POWER GENERATING APPARATUS**
HYDRAULIKMASCHINE UND VORRICHTUNG ZUR STROMERZEUGUNG AUS ERNEUERBAREN ENERGIEN
MACHINE HYDRAULIQUE ET APPAREIL DE GÉNÉRATION DE PUISSANCE DE TYPE À ÉNERGIE RENOUVELABLE

(30) Priority: 17.11.2016 JP 2016224586
(43) Date of publication of application: 23.05.2018
(73) Proprietor: Mitsubishi Heavy Industries, Ltd., Tokyo 108-8215 (JP); Artemis Intelligent Power Limited, Loanhead, Midlothian EH20 9TB (GB)
(72) Inventor: Kawabata, Shinji, Tokyo, 108-8215 (JP); Noguchi, Toshihide, Tokyo, 108-8215 (JP); Lavender, Jack, Loanhead, Midlothian, Lothian EH20 9TB (GB); Dodson, Henry, Loanhead, Midlothian, Lothian EH20 9TB (GB)
(74) Representative: Henkel, Breuer & Partner

(56) References cited:
- EP-A1- 2 770 203
- JP-A- 2014 129 777

## Description

### TECHNICAL FIELD

The present disclosure relates to a hydraulic machine and a renewable energy type power generating apparatus.

### BACKGROUND ART

Hydraulic machines such as a hydraulic pump and a hydraulic motor have been known.

For example, in a hydraulic machine described in US 2010/0040470 A1, periodical change in a volume of a working chamber, defined by a cylinder and a piston, is utilized to achieve conversion between fluid energy of working fluid and rotational energy of a rotor shaft.

In a hydraulic machine described in JP 2014-163375 A, the working oil flowing in and out from a working chamber is controlled with a high pressure valve and a low pressure valve provided between the working chamber and a high pressure hydraulic line and a low pressure hydraulic line of the hydraulic machine.

JP 2014-129777 A, on which the preamble portion of claim 1 is based, discloses a hydraulic machine such as a hydraulic pump and a hydraulic motor for use in a renewable energy type power generating apparatus.

### SUMMARY

The present inventors have found that when the low pressure valve is closed while the working oil is flowing in the hydraulic machine with a long or asymmetrical passage on a downstream side of the low pressure valve, cavitation occurs due to sharp pressure drop and is followed by surge pressure as a result of pressure recovery. Furthermore, a flow in the downstream side passage may be uneven. Thus, components of the hydraulic machine might be damaged due to pressure fluctuation (pressure spike) in the low pressure hydraulic line.

In view of the above, an object of at least some embodiment of the present invention is to provide a hydraulic machine and a renewable energy type power generating apparatus in which pressure fluctuation in a low pressure hydraulic line can be suppressed.

(1) A hydraulic machine according to the present invention includes the features of claim 1 comprising: a rotor shaft; a cylinder provided along a radial direction of the rotor shaft; a piston forming a hydraulic chamber together with the cylinder, the piston being configured to be guided by the cylinder so as to be reciprocally movable along the radial direction in the cylinder; a low pressure hydraulic line and a high pressure hydraulic line which are communicable with the hydraulic chamber; a cam disposed in a cam chamber which is located on an inner side in the radial direction with respect to the cylinder and which forms at least a part of the low pressure hydraulic line, the cam being configured to rotate together with the rotor shaft in conjunction with a reciprocating motion of the piston; a high pressure valve disposed between the hydraulic chamber and the high pressure hydraulic line for switching a communication state between the hydraulic chamber and the high pressure hydraulic line by using a first electromagnet; and a low pressure valve disposed between the hydraulic chamber and the low pressure hydraulic line for switching a communication state between the hydraulic chamber and the low pressure hydraulic line by using a second electromagnet provided separately from the first electromagnet.

The low pressure valve has a low pressure valve body disposed, on an inner side in the radial direction with respect to a high pressure valve body of the high pressure valve, between the cylinder and the low pressure hydraulic line.

In the configuration (1), the first electromagnet for driving the high pressure valve is provided separately from the second electromagnet for driving the low pressure valve. Thus, the high pressure valve and the low pressure valve can be operated to be opened or closed independently from each other. Thus, the communication state can be switched smoothly with the high pressure valve and the low pressure valve. In the configuration (1), the low pressure hydraulic line, communicable with the hydraulic chamber, includes the cam chamber, and the low pressure valve body of the low pressure valve is disposed, on the inner side in the radial direction with respect to a high pressure valve body of the high pressure valve (closer to the cylinder than the high pressure valve body). Thus, a smaller distance between the low pressure valve body and the cam chamber can be achieved, and thus a shorter passage between the cam chamber forming a low pressurised oil line can be achieved, compared with a configuration in which the low pressure valve body is disposed on the outer side of the high pressure valve body in the radial direction (that is, farther from the cylinder than the high pressure valve body). Thus, cavitation occurring on the downstream side of the low pressure valve in the operation of closing the low pressure valve is reduced, and pressure fluctuation (pressure spike) in the low pressure hydraulic line can be suppressed.
(2) In some embodiments, in the configuration (1), the low pressure valve includes a low pressure valve seat on which the low pressure valve body is to seat, and the low pressure valve body is located farther in the radial direction from the cylinder than the low pressure valve seat.

In the configuration (2), when the working oil in the hydraulic chamber has a high pressure, the low pressure valve body can be pressed against the low pressure valve seat with the pressure difference between both sides of the low pressure valve. Thus, the sealing of the gap between the low pressure valve body and the low pressure valve seat can be ensured.

The low pressure valve body is located on the outer side of the low pressure valve seat in the radial direction. Thus, for example, when the cam chamber surrounded by cylinder blocks form a part of the low pressurised oil line, a shorter low pressure passage can be achieved between the low pressure valve seat and the cam chamber, whereby pressure fluctuation in the low pressurised oil line can be suppressed.
(3) In some embodiments, in the configuration (1) or (2), the low pressure valve body has an opening for permitting working oil flowing between the high pressure valve and the cylinder to flow therethrough.

In the configuration (3), the low pressure valve can be positioned on radially inner side of the radial direction position of the high pressure valve. Thus, an even shorter low pressure passage can be achieved between the cylinder and the cam chamber. Furthermore, it is possible to suppress fluid force as a result of collision between the low pressure valve and the working oil flowing between the high pressure valve and the cylinder, acting on the low pressure valve
(4) In some embodiments, in the configuration (3), the low pressure valve body has a plurality of the openings arranged so as to be symmetrical about a central axis of the hydraulic chamber.

In the configuration (4), an attempt to achieve a symmetrical flow of the working oil passing through the low pressure valve body between the high pressure valve and the cylinder, whereby the loss and pressure fluctuation due to asymmetrical flow can be suppressed.
(5) In some embodiments, in any one of the configurations (1) to (4), the low pressure valve includes the low pressure valve body arranged coaxially with the high pressure valve body.

In the configuration (5), the low pressure valve body is arranged coaxially with the high pressure valve body. Thus, a flow of the working oil through one of the high pressure valve or the low pressure valve in the closed state is symmetrical with respect to the flow through the other one of the high pressure valve or the low pressure valve. Thus, the other one of the high pressure valve or the low pressure valve is less likely to be affected by an asymmetrical flow of the working oil. Thus, the reliability of the hydraulic machine can be improved.
(6) In some embodiments, in any one of the configurations (1) to (5), the high pressure valve includes a guide shaft extending along the radial direction for guiding a movement of the high pressure valve body in the radial direction, the low pressure valve includes a valve stem joined to the low pressure valve body and extending in the radial direction, and the valve stem of the low pressure valve is inserted through a through-hole formed in the radial direction through the guide shaft.

In the configuration (6) the coaxial arrangement of the high pressure valve body and the low pressure valve body can be achieved with a compact structure.
(7) In some embodiments, in any one of the configurations (1) to (6), the high pressure valve includes the first electromagnet configured to generate a magnetic force for driving the high pressure valve body, and the first electromagnet is located farther in the radial direction from the cylinder than the low pressure valve body and the high pressure valve body.

In the configuration (7), the radial direction positions of the low pressure valve body and the high pressure valve body can be located closer to the cylinder than the radial direction position of the first electromagnet. Thus, it is possible to reduce the dead volume (volume that cannot be increased or reduced by the reciprocating motion of the piston) and thereby to improve the efficiency of the hydraulic machine.
(8) In some embodiments, in the configuration (7), the high pressure valve includes: a high pressure valve seat on which the high pressure valve body is to seat; and a first biasing member for biasing the high pressure valve body toward the high pressure valve seat, and the first electromagnet is configured to drive the high pressure valve body by the magnetic force against a biasing force of the first basing member.

In the configuration (8), the first electromagnet drives the high pressure valve body against the biasing force of the first biasing member. Thus, the high pressure valve body can be maintained at a normal position by the biasing force of the first biasing member, when the first electromagnet is in a non-excited state.
(9) In some embodiments, in any one of the configurations (1) to (8), the low pressure valve includes the second electromagnet configured to generate a magnetic force for driving the low pressure valve body, and the second electromagnet is located farther in the radial direction from the cylinder than the low pressure valve body and the high pressure valve body.

In the configuration (9), the radial direction positions of the low pressure valve body and the high pressure valve body can be located closer to the cylinder than the radial direction position of the second electromagnet. Thus, the hydraulic machine can have a higher efficiency with the dead volume (volume that cannot be increased or reduced by the reciprocating motion of the piston) reduced in the hydraulic chamber.
(10) In some embodiments, in the configuration (9), the low pressure valve further includes a second biasing member for biasing the low pressure valve body toward a direction away from the low pressure valve seat, and the second electromagnet is configured to drive the low pressure valve body by the magnetic force against a biasing force of the second biasing member.

In the configuration (10), the second electromagnet drives the low pressure valve body against the biasing force of the second biasing member. Thus, the high pressure valve body can be maintained at the normal position by the biasing force of the second biasing member, when the second electromagnet is in the non-excited state.
(11) In some embodiments, in any one of the configurations (1) to (10), wherein the high pressure valve includes the first electromagnet configured to generate a magnetic force for driving the high pressure valve body, wherein the low pressure valve includes the second electromagnet configured to generate a magnetic force for driving the low pressure valve body, and wherein the first electromagnet and the second electromagnet are arranged along a central axis of the hydraulic chamber in a position farther in the radial direction from the cylinder than the low pressure valve body and the high pressure valve body.

In the configuration (11), the radial direction positions of the low pressure valve body and the high pressure valve body can be located closer to the cylinder than the radial direction positions of the first electromagnet and the second electromagnet. Thus, it is possible to reduce the dead volume (volume that cannot be increased or reduced by the reciprocating motion of the piston) and thereby to improve the efficiency of the hydraulic machine.
(12) In some embodiments, in the configuration (11), the second electromagnet is disposed farther in the radial direction from the cylinder than the first electromagnet.

In the configuration (12), the first electromagnet for the high pressure valve and the high pressure valve body can be located close to each other. Thus, a rigid structure in which the high pressure valve can withstand a large load from the high pressure working oil in the high pressurised oil line can be achieved as a compact structure.
(13) In some embodiments, in any one of the configurations (1) to (12), the high pressure valve includes the high pressure valve body and a high pressure valve seat on which the high pressure valve body is to seat, and the high pressure valve body is disposed farther in the radial direction from the cylinder than the high pressure valve seat.

In the configuration (13), when the working oil in the hydraulic chamber has a low pressure, the high pressure valve body can be pressed against the high pressure valve seat with the pressure difference between both sides of the high pressure valve. Thus, the sealing of the gap between the high pressure valve body and the high pressure valve seat can be ensured.
(14) A renewable energy type power generating apparatus according to at least one embodiment of the present invention includes: a rotor configured to receive a renewable energy to rotate; a hydraulic pump configured to be driven by rotation of the rotor; a hydraulic motor configured to be driven by a pressurized oil generated by the hydraulic pump; and an electric generator configured to be driven by the hydraulic motor. At least one of the hydraulic pump or the hydraulic motor is the hydraulic machine with any one of the configurations (1) to (13). The high pressure hydraulic line connects an outlet of the hydraulic pump and an inlet of the hydraulic motor. The low pressure hydraulic line connects an outlet of the hydraulic motor and an inlet of the hydraulic pump.

In the configuration (14), the first electromagnet for driving the high pressure valve is provided separately from the second electromagnet for driving the low pressure valve. Thus, the high pressure valve and the low pressure valve can be operated to be opened or closed independently from each other. Thus, the communication state can be switched smoothly with the high pressure valve and the low pressure valve. In the configuration (14), the low pressure hydraulic line, communicable with the hydraulic chamber, includes the cam chamber, and the low pressure valve body of the low pressure valve is disposed, on the inner side in the radial direction with respect to a high pressure valve body of the high pressure valve (closer to the cylinder than the high pressure valve body). Thus, a smaller distance between the low pressure valve body and the cam chamber can be achieved, and thus a shorter passage between the cam chamber forming a low pressurised oil line can be achieved, compared with a configuration in which the low pressure valve body is disposed on the outer side of the high pressure valve body in the radial direction (that is, farther from the cylinder than the high pressure valve body). Thus, cavitation occurring on the downstream side of the low pressure valve in the operation of closing the low pressure valve is reduced, and pressure fluctuation (pressure spike) in the low pressure hydraulic line can be suppressed.

At least one embodiment of the present invention can provide a hydraulic machine and a renewable energy type power generating apparatus in which pressure fluctuation in a low pressure hydraulic line can be suppressed.

### BRIEF DESCRIPTION OF DRAWINGS

FIG. 1 is a schematic view of a wind turbine generator according to one embodiment;

FIG. 2 is a schematic view of a hydraulic machine according to one embodiment;
FIG. 3 is a diagram illustrating an example of a configuration around a hydraulic chamber of the hydraulic machine according to one embodiment;
FIG. 4 is a diagram illustrating an example of a configuration around the hydraulic chamber of the hydraulic machine according to one embodiment;
FIG. 5 is a diagram illustrating an example of a configuration around the hydraulic chamber of the hydraulic machine according to one embodiment;
FIG. 6 is a cross-sectional view of a sleeve supporting member illustrated in FIG. 3 taken along the line A-A; and
FIG. 7 is a cross-sectional view of a low pressure valve body illustrated in FIG. 3.

### DETAILED DESCRIPTION

Embodiments of the present invention will now be described in detail with reference to the accompanying drawings. It is intended, however, that unless particularly specified, dimensions, materials, shapes, relative positions, and the like of components described in the embodiments or illustrated in the accompanying drawings shall be interpreted as illustrative only and not limitative of the scope of the present invention.

First of all, a wind turbine generator employing a hydraulic machine (a hydraulic pump or a hydraulic motor) according to some embodiments will be described.

The wind turbine generator is described below as an example of a renewable energy type power generating apparatus. The renewable energy type power generating apparatus employing the hydraulic machine may be other renewable energy power generating apparatus such as, for example, apparatuses generating power on the basis of tidal current, ocean current, stream, and the like.

An apparatus employing the hydraulic machine according to some embodiments is not limited to the type power generating apparatus, and may be other apparatuses such as a construction machine for example.

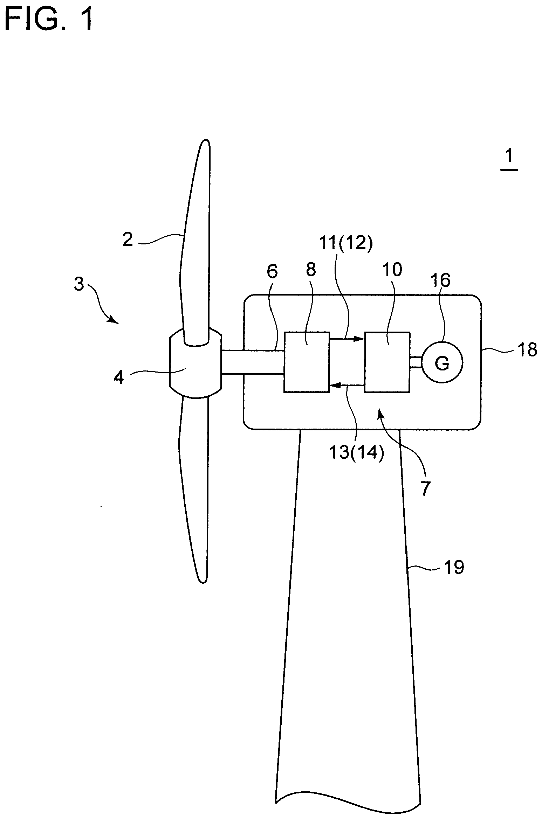

FIG. 1 is a schematic view of a wind turbine generator according to one embodiment.

As illustrated in FIG. 1, the wind turbine generator 1 includes: a rotor 3 configured to rotate by receiving wind as renewable energy; a hydraulic transmission 7 for transmitting the rotation of the rotor 3; and an electric generator 16 for generating power.

The rotor 3 includes at least one blade 2 and a hub 4 to which the blade 2 is attached.

The hydraulic transmission 7 includes: a hydraulic pump 8 coupled to the rotor 3 via a rotor shaft 6; a hydraulic motor 10; and a high pressure hydraulic line 12 and a low pressure hydraulic line 14 that connect the hydraulic pump 8 to the hydraulic motor 10.

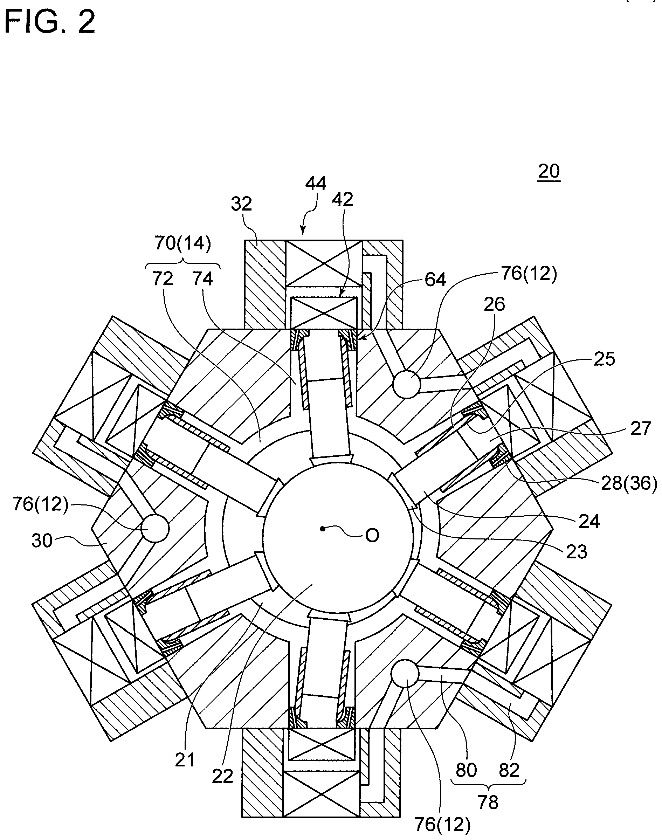

The high pressure hydraulic line 12 includes: a high-pressure external pipe 11 which connects an outlet of the hydraulic pump 8 to an inlet of the hydraulic motor 10; and a high-pressure internal flow passage 76 (described later, see FIG. 2) provided to a hydraulic machine (the hydraulic pump 8 or the hydraulic motor 10).

The low pressure hydraulic line 14 includes a low-pressure external pipe 13 which connects an outlet of the hydraulic motor 10 to an inlet of the hydraulic pump 8; and a cam chamber 70 (described later, see FIG. 2) provided to the hydraulic machine (the hydraulic pump 8 or the hydraulic motor 10).

The electric generator 16 is coupled to the hydraulic motor 10 via an output shaft of the hydraulic motor 10. In one embodiment, the electric generator 16 is a synchronous electric generator connected to a power grid and driven by the hydraulic motor 10.

The hydraulic pump 8, the hydraulic motor 10, and the electric generator 16 may be installed in a nacelle 18 provided on a tower 19.

In the wind turbine generator 1 illustrated in FIG. 1, rotational energy of the rotor 3 is input the electric generator 16 via the hydraulic transmission 7, including the hydraulic pump 8 and the hydraulic motor 10, and thus the power is generated by the electric generator 16.

When the blade 2 receives wind, the rotor 3 as a whole is rotated by the wind power, whereby the hydraulic pump 8 is driven by the rotor 3 to pressurize working oil, and thus higher pressure working oil (pressurised oil) is generated. The pressurised oil generated by the hydraulic pump 8 is supplied to the hydraulic motor 10 through the high pressure hydraulic line 12. The hydraulic motor 10 is driven by the pressurised oil. Then, the power is generated by the electric generator 16 connected to the hydraulic motor 10 via the output shaft. The working oil, having a low pressure after working in the hydraulic motor 10, flows into the hydraulic pump 8 again through the low pressure hydraulic line 14. The hydraulic pump 8 and the hydraulic motor 10 may be of a variable capacity type with an adjustable displacement volume.

In some embodiments, any one of the hydraulic pump 8 or the hydraulic motor 10 is the hydraulic machine described below.

Next, the hydraulic machine according to some embodiments is described.

FIG. 2 is a schematic view illustrating a configuration of a hydraulic machine 20 according to one embodiment. As illustrated in FIG. 2, the hydraulic machine 20 includes: a rotor shaft 21; a cylinder 25 provided along a radial direction of the rotor shaft 21; a piston 24 reciprocally movable in the cylinders 25; and a cam 22 which rotates together with the rotor shaft 21. In an exemplary embodiment illustrated in FIG. 2, a plurality of the cylinders 25 and the pistons 24 are arranged along a circumferential direction of the hydraulic machine 20.

In the specification "the radial direction of the rotor shaft 21" may be hereinafter simply referred to as a "radial direction".

The piston 24 forms a hydraulic chamber 27 together with the cylinder 25, and is provide to reciprocally move in the cylinder 25 along the radial direction while being guide by the cylinder 25.

In an embodiment illustrated in FIG. 2, a piston shoe 23 that contacts with a cam surface of the cam 22 is attached on and end of the piston 24 on a side of the cam 22, for smoothly converting the reciprocating motion of the piston 24 and rotating motion of the rotor shaft 21.

The cam 22 is provided in a cam chamber 70 that is at least partially position on a radially inner side of the cylinder 25, and rotates together with the rotor shaft 21 in accordance with the reciprocating motion of the piston 24.

In the embodiment illustrated in FIG. 2, the cam chamber 70 includes: a main chamber 72 surrounded by cylinder blocks 30 of the hydraulic machine 20; and sub chambers 74 formed between the cylinder 25 and the cylinder blocks 30, on an outer circumferential side of the cylinder 25. The cam 22 is provided in the main chamber 72 of the cam chamber 70 positioned on the radially inner side of the cylinder 25.

The main chamber 72 of the cam chamber 70 may extend in an axial direction of the hydraulic machine 20 on an inner circumferential side of the cylinder blocks 30.

The cylinder 25 is formed of a cylinder sleeve 26. In the exemplary embodiment illustrated in FIG. 2, the cylinder sleeve 26 is supported by a sleeve supporting member 28, attached to the cylinder block 30, in such a manner as to be pivotable in accordance with the rotation of the cam 22. The sleeve supporting member 28 may be provided with a holding member (not illustrated) that supports the cylinder sleeve 26 so as not to fall off from the sleeve supporting member 28.

In the embodiment illustrated in FIG. 2, the cam 22 is an eccentric cam that is provided while being eccentric with respect to an axial center O of the rotor shaft 21. The cam 22 and the rotor shaft 21 to which the cam 22 is attached make a single turn while the piston 24 reciprocates for a single time.

In other embodiments, the cam 22 may be an annular multilobed cam (ring cam) with a plurality of lobes (protrusions). In such a case, the piston 24 reciprocates for a number of time corresponding to the number of lobes, while the cam 22 and the rotor shaft 21 to which the cam 22 is attached make a single turn.

The cam chamber 70 forms the low pressure hydraulic line 14 communicable with the hydraulic chamber 27, together with the low-pressure external pipe 13 (see FIG. 1) described above. The cam chamber 70 (low pressure hydraulic line 14) can communicate with the hydraulic chamber 27 through a low pressure passage 64 described later.

A high-pressure internal flow passage 76 extending along an axial direction of the hydraulic machine 20 is formed in the cylinder block 30.

The high-pressure internal flow passage 76 forms the high pressure hydraulic line 12 communicable with the hydraulic chamber 27 together with the high-pressure external pipe 11 (see FIG. 1) described above. In the embodiment illustrated in FIG. 2, the hydraulic machine 20 is provided with a plurality of the high-pressure internal flow passages 76 arranged about the center O of the rotor shaft 21 at an angular interval. The high-pressure internal flow passages 76 are connected to the high-pressure external pipe 11 (see FIG. 1) through flow passage provided in an endplate (not illustrated) positioned at an end of the hydraulic machine 20 in the axial direction.

The high-pressure internal flow passage 76 (high pressure hydraulic line 12) can communicate with the hydraulic chamber 27 through a high-pressure communication passage 78 including: a first high-pressure passage 80 provided in the cylinder block 30; and a second high-pressure passage 82 provided in a valve block 32 that accommodates a low pressure valve 42 and a high pressure valve 44.

The hydraulic machine 20 includes: the high pressure valve 44 for switching a communication state between the hydraulic chamber 27 and the high pressure hydraulic line 12; and the low pressure valve 42 for switching the communication state between the hydraulic chamber 27 and the low pressure hydraulic line 14.

In the hydraulic machine 20 illustrated in FIG. 2, the high pressure valve 44 is provided between the cylinder 25 and the high-pressure internal flow passage 76 (high pressure hydraulic line 12). The low pressure valve 42 is disposed between the cylinder 25 and the cam chamber 70 (low pressure hydraulic line 14).

In the hydraulic machine 20 illustrated in FIG. 2, the low pressure valve 42 and the high pressure valve 44 are accommodated in the valve block 32 attached to the cylinder block 30.

In the hydraulic machine 20, it may be needed to ensure sealing between members on a high pressure side where a relatively high pressure working oil flows.

Thus, in the embodiment described in FIG. 2, the high-pressure internal flow passage 76 is formed in the cylinder block 30, and the high-pressure internal flow passage 76 and the hydraulic chamber 27 communicate with each other via the first high-pressure passage 80 provided in the cylinder block 30 and the second high-pressure passage 82 provided in the valve block 32. Thus, only a section between the cylinder block 30 and the valve block 32 needs to be sealed. The first high-pressure passage 80 and the second high-pressure passage 82 have relatively small diameter, and thus a seal ring with a relatively small diameter can be provided to a connection member therebetween. All things considered, in the mode illustrated in FIG. 2, the sealing can he relatively easily achieved for a high-pressure region.

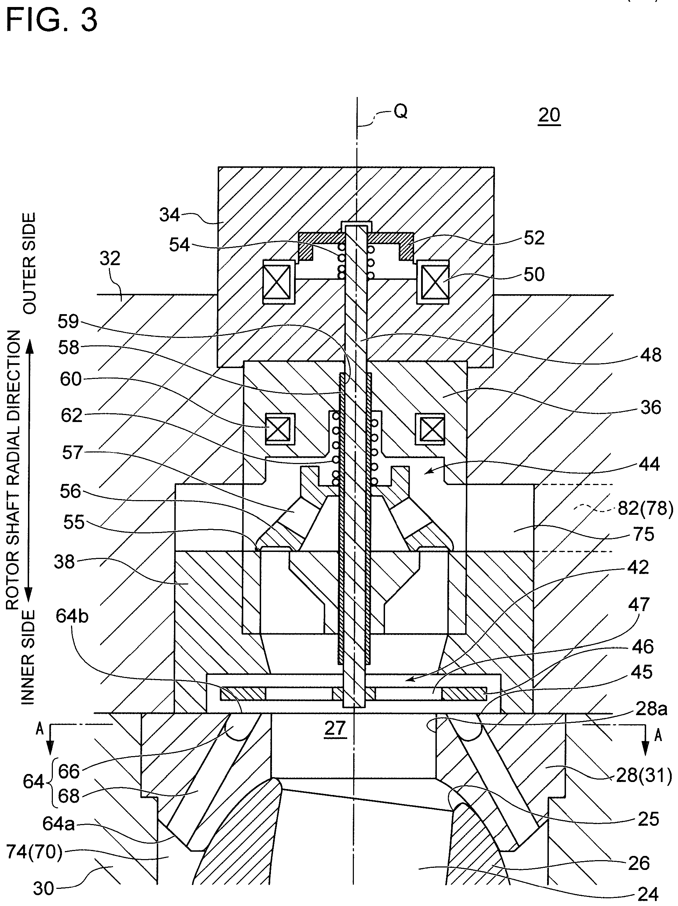

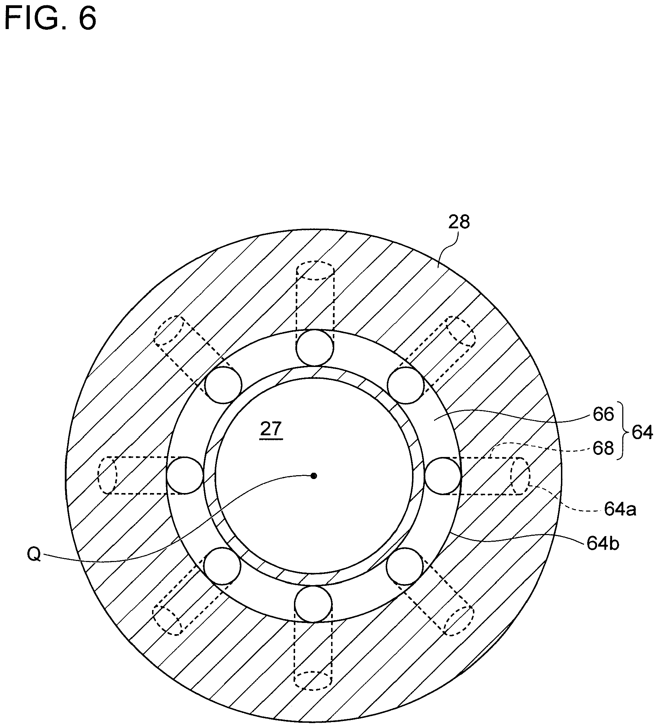

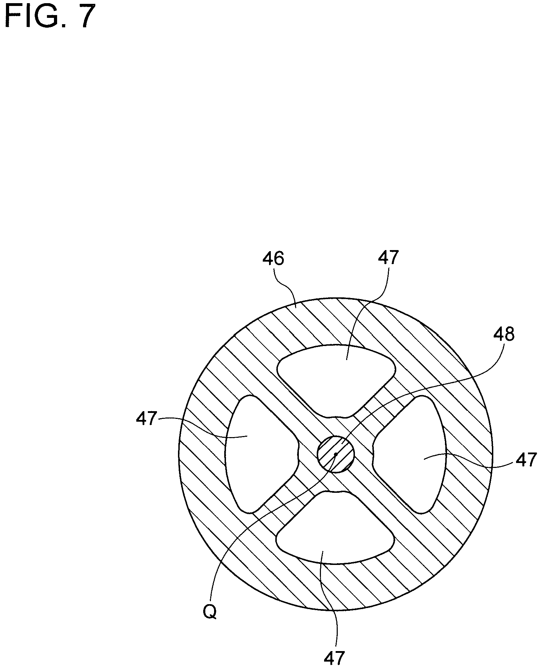

FIG. 3 to FIG. 5 are each a diagram illustrating an example of a configuration around the hydraulic chamber 27 of the hydraulic machine 20 according to one embodiment. FIG. 6 is a cross-sectional view of the sleeve supporting member 28 (low pressure seat-forming part 31) illustrated in FIG. 3, taken along the line A-A. FIG. 7 is a cross-sectional view of the low pressure valve body 46 illustrated in FIG. 3, taken along a direction orthogonal to a central axis Q of the hydraulic chamber 27.

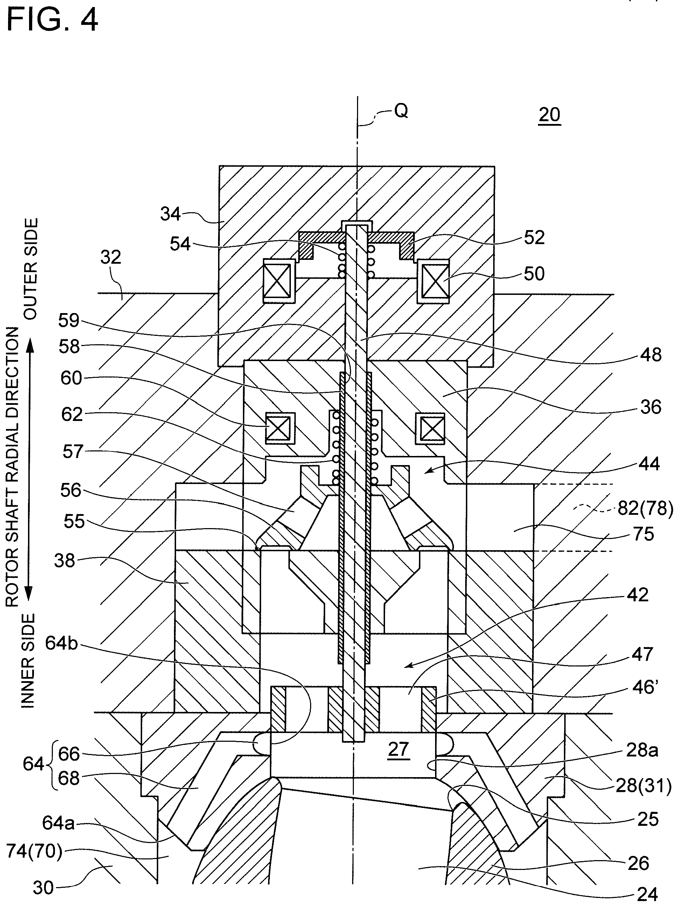

FIG. 3 and FIG. 4 each illustrate an example of a configuration around the hydraulic chamber 27 of the hydraulic machine 20 described above.

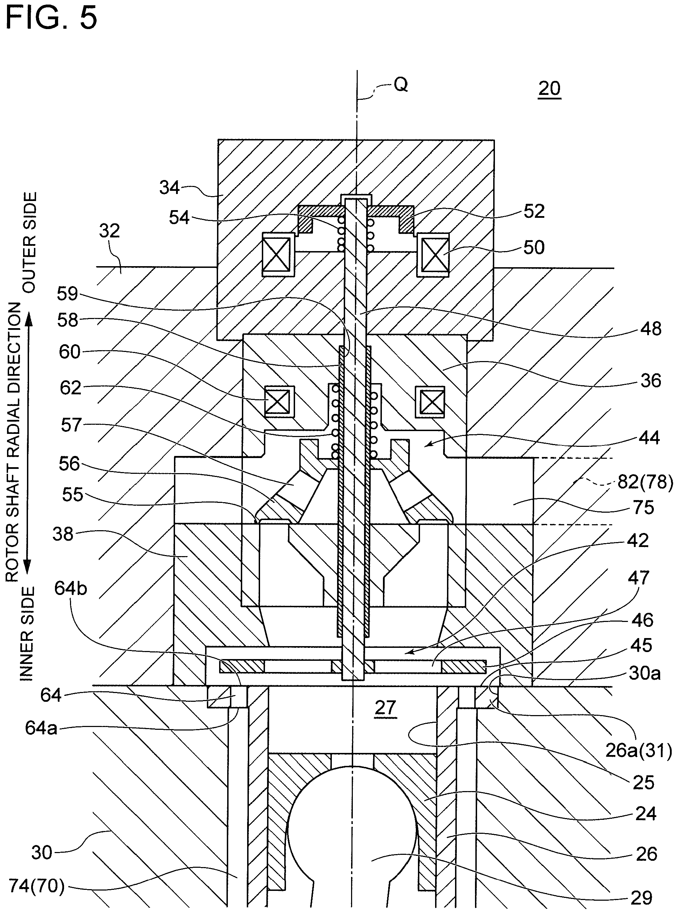

FIG. 5 illustrates an example of a configuration around the hydraulic chamber 27 of the hydraulic machine 20 which has a configuration which is similar to that described above, except for the configuration of the cylinder 25 and the piston 24. More specifically, the cylinder 25, in the hydraulic machine 20 illustrated in FIG. 5, is formed by the cylinder sleeve 26 fixed to the cylinder block 30. The cylinder sleeve 26 has an end portion, on the side opposite to the cam 22 (see FIG. 2), provide with a flange portion 26a in contact with a recess portion 30a formed on the cylinder block 30. A connecting rod 29 pivotally coupled to the piston 24 is provided between the piston 24 reciprocally movable in the cylinder 25 and the cam 22 (see FIG. 2). The reciprocating motion of the piston 24 or the rotating motion of the cam 22 is transmitted between the piston 24 and the cam 22 via the connecting rod 29.

In exemplary embodiments illustrated in FIG. 3 to FIG. 5, the high pressure valve 44 of the hydraulic machine 20 is at least partially accommodated in the high pressure valve casing 36, and includes: a high pressure valve body 56; and a high pressure valve seat 55 on which the high pressure valve body 56 can be seated. The high pressure valve seat 55 is formed on the high pressure valve casing 36.

When the high pressure valve body 56 is seated on the high pressure valve seat 55 (when the high pressure valve 44 is closed), the hydraulic chamber 27 and the high-pressure internal flow passage 76 (high pressure hydraulic line 12) are in the non-communication state. When the high pressure valve body 56 is separated from the high pressure valve seat 55 (when the high pressure valve 44 is open), the hydraulic chamber 27 and the high-pressure internal flow passage 76 (high pressure hydraulic line 12) are in the communication state.

The high pressure valve 44 illustrated in FIG. 3 to FIG. 5 is a solenoid valve which is configured to be capable of switching the communication state between the hydraulic chamber 27 and the high pressure hydraulic line 12 by using a first electromagnet 60. More specifically, the high pressure valve 44 is a normally closed valve including: a first biasing member 62 (a spring in the embodiment illustrated in FIG. 3 to FIG. 5) that biases the high pressure valve body 56 toward the high pressure valve seat 55; and the first electromagnet 60 for driving the high pressure valve body 56. The first electromagnet 60 is configured to drive the high pressure valve body 56, against the biasing force of the first biasing member 62, with magnetic force. More specifically, when current is supplied to the first electromagnet 60, the first electromagnet 60 generates magnetic force so that the high pressure valve body 56 is pulled radially outward (in a valve opening direction). Thus, opening/closing of the high pressure valve 44 can be controlled with the magnetic attraction force acting on the high pressure valve body 56 adjusted by controlling current supply to the first electromagnet 60.

The high pressure valve 44 includes guide shaft 58 extending in the radial direction. The guide shaft 58 guides the movement of the high pressure valve body 56 in the radial direction (that is, the movement in the valve opening direction and the valve closing direction).

In the exemplary embodiment illustrated in FIG. 3 or FIG. 5, the low pressure valve 42 of the hydraulic machine 20 includes: a low pressure valve body 46 of a poppet type; and a low pressure valve seat 45 on which the low pressure valve body 46 can be seated.

The low pressure valve seat 45 is formed by the low pressure seat-forming part 31. In the example illustrated in FIG. 3, the low pressure seat-forming part 31 includes the sleeve supporting member 28 attached to the cylinder block 30, and continues to one end (second end 64b) of the low pressure passage 64 formed in the sleeve supporting member 28. In the example illustrated in FIG. 5, the low pressure seat-forming part 31 includes a flange portion 26a of the cylinder sleeve 26 supported by the cylinder block 30, and continues to the one end (second end 64b) of the low pressure passage 64 formed in the flange portion 26a.

Thus, in the embodiment illustrated in FIG. 3 or FIG. 5, when the low pressure valve body 46 is seated on the low pressure valve seat 45 (when the low pressure valve 42 is closed), the hydraulic chamber 27 and the cam chamber 70 (low pressure hydraulic line 14) are in the non-communication state. When the low pressure valve body 46 is separated from the low pressure valve seat 45 (when the low pressure valve 42 is open), the hydraulic chamber 27 and the cam chamber 70 (low pressure hydraulic line 14) are in the communication state through the low pressure passage 64.

The sleeve supporting member 28, as the low pressure seat-forming part 31 where the low pressure valve seat 45 is formed, may be integrally formed with the cylinder block 30. The low pressure valve seat 45 may be formed on the sleeve supporting member 28 that is integrally formed with the cylinder block 30.

In the exemplary embodiment illustrated in FIG. 4, the low pressure valve 42 of the hydraulic machine 20 includes a cylindrical low pressure valve body 46' provided on an inner circumference side of the sleeve supporting member 28. The low pressure valve body 46' is slidable on an inner circumference surface 28a of the sleeve supporting member 28. The one end (second end 64b) of the low pressure passage 64 provided between the cam chamber 70 and the hydraulic chamber 27 has an opening formed on the inner circumference surface 28a of the sleeve supporting member 28.

Thus, when the low pressure valve body 46' is at a radial direction position where the low pressure valve body 46' completely closes the one end (second end 64b) of the low pressure passage 64 (when the low pressure valve 42 is closed), the hydraulic chamber 27 and the cam chamber 70 (low pressure hydraulic line 14) are in the non-communication state. When the low pressure valve body 46' is at a radial direction position where the low pressure valve body 46' does not overlap with at least a part of the opening of the one end (second end 64b) of the low pressure passage 64 (when the low pressure valve 42 is open), the hydraulic chamber 27 and the cam chamber 70 (low pressure hydraulic line 14) are in the communication state through the low pressure passage 64.

The low pressure valve 42 illustrated in FIG. 3 to FIG. 5 is a solenoid valve that can switch the communication state between the hydraulic chamber 27 and the low pressure hydraulic line 14 by using a second electromagnet 50 that is provided separately from the first electromagnet 60 described above. More specifically, the low pressure valve 42 is a normally opened solenoid valve including: a second biasing member 54 (a spring in the embodiment illustrated in FIG. 3 to FIG. 5) that biases the low pressure valve body 46 or 46' in a direction of moving away from the low pressure valve seat 45 of the opening of the first end (second end 64b) of the low pressure passage 64 (that is, in the valve opening direction); and the second electromagnet 50 for driving the low pressure valve body 46 or 46'

The low pressure valve body 46 or 46' is coupled to one end side of a valve stem 48 extending along the radial direction, and an armature 52 is fixed to the second end of the valve stem 48. The second electromagnet 50 is configured to drive the low pressure valve body 46, against the biasing force of the second biasing member 54, with magnetic force.

Specifically, when current is supplied to the second electromagnet 50, the second electromagnet 50 generates the magnetic force with which the armature 52 is pulled toward the radially inner side (valve closing direction). The armature 52, the valve stem 48, and the low pressure valve body 46 or 46' are integrally moved in the radial direction in accordance with the magnetic attraction force. Thus, opening/closing of the low pressure valve 42 can be controlled with the magnetic attraction force acting on the armature 52 adjusted by the controlling the current supplied to the second electromagnet 50.

The valve stem 48 of the low pressure valve 42 is disposed through a through hole 59 formed through the guide shaft 58 of the high pressure valve 44 in the radial direction. Thus, the guide shaft 58 guides the movement of the valve stem 48 and the low pressure valve body 46 or 46' in the radial direction (the movement in the valve opening direction and the valve closing direction).

The low pressure valve 42 is at least partially accommodated in the low pressure valve casing 34. In the embodiment illustrated in FIG. 3 to FIG. 5, the low pressure valve casing 34 accommodates a part of the valve stem 48, the second electromagnet 50, the armature 52, and the second biasing member 54.

In the embodiment illustrated in FIG. 3 to FIG. 5, a bulkhead 38 is provided between the high pressure valve casing 36 and the cylinder block 30 in the hydraulic machine 20. The bulkhead 38 separates a high pressure region in which relatively high pressure working oil flows from a low pressure region in which relatively low pressure working oil flows.

In the embodiment illustrated in FIG. 3 to FIG. 5, the hydraulic chamber 27 is a space that communicates with a region defined by the piston 24 and the cylinder 25, when the closed state of the high pressure valve 44 and the low pressure valve 42 is achieved in the hydraulic machine 20.

The central axis Q of the hydraulic chamber 27 is a central axis of a portion of the hydraulic chamber 27 defined by members which do not move with respect to the cylinder block 30. In the embodiment illustrated in FIG. 3 and FIG. 4, the central axis Q of the hydraulic chamber 27 is a central axis of a portion of the hydraulic chamber 27 defined by members which do not move with respect to the cylinder block 30 (for example, members such as the sleeve supporting member 28 and the bulkhead 38 that does not pivot like the cylinder 25 and the piston 24). In the embodiment illustrated in FIG. 5, the members which do not move with respect to the cylinder block 30 includes the cylinder sleeve 26, and the central axis Q of the hydraulic chamber 27 also serves as the central axis of the cylinder 25.

In the hydraulic machine 20 including the high pressure valve 44 and the low pressure valve 42 described above, the pressure in the hydraulic chamber 27 periodically changes in accordance with the reciprocating motion of the piston 24 due to the opening/closing operation on the high pressure valve 44 and the low pressure valve 42.

For example, when the hydraulic machine 20 is the hydraulic motor 10 (see FIG. 1), the piston 24 periodically reciprocates due to pressure difference between the high pressure hydraulic line 12 and the low pressure hydraulic line 14 caused by the hydraulic pump 8. Thus, a motor process, in which the piston 24 moves from the top dead point to the bottom dead point, and a discharge process, in which the piston 24 moves from the bottom dead portion to the top dead portion, are repeated. While the hydraulic motor 10 is operating, the volume of the hydraulic chamber 27 defined by the piston 24 and the inner wall surface of the cylinder 25 periodically changes. Specifically, in the hydraulic motor 10, the high pressure valve 44 opens and the low pressure valve 42 closes in the motor process, whereby the working oil flows into the hydraulic chamber 27 from the high pressure hydraulic line 12. In the discharge process, the high pressure valve 44 is closed and the low pressure valve 42 is opened, whereby the working oil that has worked in the hydraulic chamber 27 is sent to the low pressure hydraulic line 14.

The reciprocating motion of the piston 24 is caused by introducing the pressurised oil into the hydraulic chamber 27 in the manner described above, and is converted into the rotating motion of the cam 22. As a result, the rotor shaft 21 of the hydraulic machine 20 rotates together with the cam 22.

For example, when the hydraulic machine 20 is the hydraulic pump 8 (see FIG. 1), the piston 24 periodically reciprocates along the cam surface, in accordance with the rotation of the cam 22 together with the rotor shaft 21. Thus, a pump process in which the piston 24 moves from the bottom dead point to the top dead point; and an intake process in which the piston 24 moves from the top dead point to the bottom dead point are repeated. Thus, the volume of the hydraulic chamber 27 defined by the piston 24 and the inner wall surface of the cylinder 25 periodically changes. In the hydraulic pump 8, the high pressure valve 44 is closed and the low pressure valve 42 is opened in the intake process. Thus, the working oil flows into the hydraulic chamber 27 from the low pressure hydraulic line 14. In the pump process, the high pressure valve 44 is opened and the low pressure valve 42 is closed. Thus, the compressed working oil is sent to the high pressure hydraulic line 12 from the hydraulic chamber 27.

In this manner, the rotating motion of the cam 22, rotating together with the rotor shaft 21 of the hydraulic machine 20, is converted into the reciprocating motion of the piston 24. Thus, the volume of the hydraulic chamber 27 periodically changes, and the high pressure working oil (pressurised oil) is generated in the hydraulic chamber 27.

As illustrated in FIG. 3 to FIG. 5, the hydraulic machine 20 includes the low pressure passage 64 having one end (first end) 64a opening to the cam chamber 70 and the other end (second end) 64b positioned on the side of the low pressure valve 42.

In the embodiment illustrated in FIG. 3 and FIG. 4, the low pressure passage 64 is provided through the sleeve supporting member 28 as the low pressure seat-forming part 31. In the embodiment illustrated in FIG. 5, the low pressure passage is provided through the flange portion 26a of the cylinder sleeve 26.

In the embodiment illustrated in FIG. 3 to FIG. 5, the first end 64a of the low pressure passage 64 opens to the sub chamber 74 (the sub chamber 74 formed between the cylinder 25 and the cylinder block 30 on the outer circumferential side of the cylinder 25) of the cam chamber 70.

Note that in the exemplary embodiment illustrated in FIG. 3 to FIG. 5, the low pressure valve body 46 of the low pressure valve 42 is disposed between the cylinder 25 and the cam chamber 70 (low pressurised oil line 14), on the inner side of the high pressure valve body 56 of the high pressure valve 44 in the radial direction.

In such a hydraulic machine 20, the low pressure hydraulic line 14, communicable with the hydraulic chamber 27, includes the cam chamber 70, and the low pressure valve body 46 is disposed, on the inner side in the radial direction with respect to the high pressure valve body 56 (closer to the cylinder 25 than the high pressure valve body 56). Thus, a smaller distance between the low pressure valve body 46 and the cam chamber 70 can be achieved, and thus a shorter passage (the low pressure passage 64 in the embodiment illustrated in FIG. 3 to FIG. 5) between the cam chamber 70 forming a low pressurised oil line 14 and the hydraulic chamber 27 can be achieved, compared with a configuration in which the low pressure valve body 46 is disposed on the outer side of the high pressure valve body 56 in the radial direction (that is, farther from the cylinder 25 than the high pressure valve body 56). Thus, cavitation occurring on the downstream side of the low pressure valve 42 in the operation of closing the low pressure valve 42 is reduced, and pressure fluctuation (pressure spike) in the low pressure hydraulic line 14 can be suppressed.

In the exemplary embodiment illustrated in FIG. 3 to FIG. 5, the low pressure valve body 46 is located farther in the radial direction from the cylinder 25 than the low pressure valve seat 45 or the opening at one end (second end 64b) of the low pressure passage 64. Thus, the low pressure valve body 46 is disposed on the outer side of the low pressure valve seat 45 or the opening at one end (second end 64b) of the low pressure passage 64 in the radial direction.

Thus, when the working oil in the hydraulic chamber 27 has a high pressure, the low pressure valve body 46 can be pressed against the low pressure valve seat 45 with the pressure difference between both sides of the low pressure valve 42. Thus, the sealing of the gap between the low pressure valve body 46 and the low pressure valve seat 45 can be ensured.

When the low pressure valve body 46 is located on the outer side of the low pressure valve seat 45 in the radial direction, a shorter low pressure passage 64 can be achieved between the low pressure valve seat 45 and the cam chamber 70, whereby pressure fluctuation in the low pressurised oil line 14 can be suppressed.

In the exemplary embodiment illustrated in FIG. 3 to FIG. 5, the high pressure valve body 56 is disposed farther in the radial direction from the cylinder 25 than the high pressure valve seat 55. Thus, the high pressure valve body56 is disposed on the outer side of the high pressure valve seat 55 in the radial direction.

Thus, when the working oil in the hydraulic chamber 27 has a low pressure, the high pressure valve body 56 can be pressed against the high pressure valve seat 55 with the pressure difference between both sides of the high pressure valve 44. Thus, the sealing of the gap between the high pressure valve body 56 and the high pressure valve seat 55 can be ensured.

In the exemplary embodiment illustrated in FIG. 3 to FIG. 5, the low pressure valve body 46 of the low pressure valve 42 is arranged coaxially with the high pressure valve body 56 of the high pressure valve 44.

As described above, the low pressure valve body 46 is arranged coaxially with the high pressure valve body 56. Thus, a flow of the working oil through one of the high pressure valve 44 or the low pressure valve 42 in the closed state is symmetrical with respect to the flow through the other one of the high pressure valve 44 or the low pressure valve 42. Thus, the other one of the high pressure valve 44 or the low pressure valve 42 is less likely to be affected by an asymmetrical flow of the working oil. Thus, the reliability of the hydraulic machine 20 can be improved.

In the embodiment illustrated in FIG. 3 and FIG. 4, the valve stem 48 of the low pressure valve 42 is disposed through a through hole 59 formed through the guide shaft 58 of the high pressure valve 44 in the radial direction. Thus, the coaxial arrangement of the high pressure valve body 56 and the low pressure valve body 46 can be achieved with a compact structure.

In the exemplary embodiment illustrated in FIG. 3 to FIG. 5, the first electromagnet 60 for generating a magnetic force for driving the high pressure valve body 56 is provided separately from the second electromagnet 50 for generating a magnetic force for driving the low pressure valve body 46 are located farther in the radial direction from the cylinder 25 than the low pressure valve body 46 and the high pressure valve body 56. Thus, the first electromagnet 60 and the second electromagnet 50 are disposed on the outer side of the low pressure valve body 46 and the high pressure valve body 56 in the radial direction.

With the first electromagnet 60 or the second electromagnet 50 disposed on the outer side of the low pressure valve body 46 and the high pressure valve body 56 in the radial direction, the radial direction positions of the low pressure valve body 46 and the high pressure valve body 56 can be located closer to the cylinder 25 than the radial direction position of the first electromagnet 60 or the second electromagnet. Thus, the hydraulic machine 20 can have a higher efficiency with a dead volume (volume that cannot be increased or reduced by the reciprocating motion of the piston 24) reduced in the hydraulic chamber 27.

In the embodiment illustrated in FIG. 3 to FIG. 5, both the first electromagnet 60 and the second electromagnet 50 can be located on the outer side of the low pressure valve body 46 and the high pressure valve body 56 in the radial direction. Thus, radial direction positions of the low pressure valve body 46 and the high pressure valve body 56 can be located closer to the cylinder 25 than the radial direction positions of the first electromagnet 60 and the second electromagnet. Thus, the hydraulic machine 20 can have a higher efficiency with the dead volume (volume that cannot be increased or reduced by the reciprocating motion of the piston 24) reduced in the hydraulic chamber 27.

In the exemplary embodiment illustrated in FIG. 3 to FIG. 5, the second electromagnet 50 for generating a magnetic force for driving the low pressure valve body 46 is located farther in the radial direction from the cylinder 25 than the first electromagnet 60 for generating a magnetic force for driving the high pressure valve body 56. Thus, the second electromagnet 50 is disposed on the outer side of the first electromagnet 60 in the radial direction.

In this configuration, the first electromagnet 60 for the high pressure valve 44 and the high pressure valve body 56 can be located close to each other. Thus, a rigid structure in which the high pressure valve 44 can withstand a large load from the high pressure working oil in the high pressure hydraulic line 12 can be achieved as a compact structure.

In the exemplary embodiment illustrated in FIG. 3 or FIG. 5, the low pressure valve seat 45 is provided on the outer circumferential side of the cylinder 25 about the central axis Q of the hydraulic chamber 27.

Thus, in the exemplary embodiment illustrated in FIG. 3, the low pressure valve seat 45 is provided on an outer circumferential side of a portion of the hydraulic chamber 27 formed by the inner circumference surface 28a of the sleeve supporting member 28, about the central axis Q.

With the low pressure valve seat 45 provided on the outer circumferential side of the cylinder 25 (or the above described portion of the hydraulic chamber 27), an attempt to achieve a symmetrical flow of the working oil, via the low pressure valve seat 45, about the central axis Q of the hydraulic chamber 27 is facilitated, whereby loss and pressure fluctuation due to asymmetrical flow can be suppressed.

In the exemplary embodiment illustrated in FIG. 3 to FIG. 5, the low pressure passage 64 is provided so as to be symmetrical about the central axis Q of the hydraulic chamber 27.

In the embodiment illustrated in FIG. 3 and FIG. 4, the low pressure passage 64 includes: an annular channel portion 66 provided on an outer circumferential side (or the outer circumferential side of the portion of the hydraulic chamber 27 formed by the inner circumference surface 28a of the sleeve supporting member 28) of the cylinder 25 about the central axis Q of the hydraulic chamber 27; and a plurality of branch channel portions 68 branching from the annular channel portion 66 and extending from the annular channel portion 66 toward the cam chamber 70.

In one embodiment, as illustrated in FIG. 3 and FIG. 6, the annular channel portion 66 is provided to the sleeve supporting member 28 as the low pressure seat-forming part 31, on the outer circumferential side of the cylinder 25 (the outer circumferential side of the portion of the hydraulic chamber 27 formed by the inner circumference surface 28a of the sleeve supporting member 28). The annular channel portion 66 continues to the low pressure valve seat 45 having an annular shape, and forms the second end 64b as an end of the low pressure passage 64 on a side of the low pressure valve 42.

In the embodiment illustrated in FIG. 3 and FIG. 6, the plurality of branch channel portions 68 branching from the annular channel portion 66 radially extend about the central axis Q of the hydraulic chamber 27, from the annular channel portion 66 toward the sub chamber 74 of the cam chamber 70.

In the embodiment illustrated in FIG. 3 to FIG. 5, the low pressure passage 64 is provided so as to be symmetrical about the central axis Q of the hydraulic chamber 27. Thus, the symmetrical flow between the low pressure passage 64 and the hydraulic chamber 27 can be achieved, whereby the loss and the pressure fluctuation due to the asymmetrical flow can be suppressed.

In the embodiment illustrated in FIG. 3 and FIG. 4, the low pressure passage 64 includes: the annular channel portion 66 provided on an outer circumferential side of the cylinder 25; and the plurality of branch channel portions 68 branching from the annular channel portion 66. Thus, the symmetrical flow between the low pressure passage 64 and the cylinder 25 can be maintained. With the annular channel portion 66 and the plurality of branch channel portions 68, the low pressure passage 64 having a large passage cross-sectional area can be achieved. Thus, cavitation occurring on the downstream side of the low pressure valve 42 in the operation of closing the low pressure valve 42 is reduced, and pressure fluctuation (pressure spike) in the low pressure hydraulic line 14 can be suppressed.

In the exemplary embodiment illustrated in FIG. 3 to FIG. 5, the low pressure valve body 46 has an opening 47 for permitting working oil flowing between the high pressure valve 44 and the cylinder 25 to flow therethrough along the radial direction.

With the low pressure valve body 46 thus provided with the opening 47, the low pressure valve 42 can be positioned on radially inner side of the radial direction position of the high pressure valve 44. Thus, an even shorter low pressure passage 64 can be achieved between the cylinder 25 and the cam chamber 70. Furthermore, it is possible to suppress fluid force as a result of collision between the low pressure valve 42 and the working oil flowing between the high pressure valve 44 and the cylinder 25, acting on the low pressure valve 42.

In some embodiments, the low pressure valve body 46 may include a plurality of openings 47 provided at positions symmetrical about the central axis Q of the hydraulic chamber 27.

For example, the low pressure valve body 46 illustrated in FIG. 3 includes a plurality of (four in an example illustrated in FIG. 7) openings 47 provided at positions rotation symmetrical about the central axis Q of the hydraulic chamber 27, as illustrated in FIG. 7 (a cross-sectional view of the low pressure valve body 46).

With the plurality of openings 47 thus provided at the positions symmetrical about the central axis Q of the hydraulic chamber 27, an attempt to achieve a symmetrical flow of the working oil passing through the low pressure valve body 46 between the high pressure valve 44 and the cylinder 25, whereby a loss and pressure fluctuation due to an asymmetrical flow can be suppressed.

In the exemplary embodiment illustrated in FIG. 3 to FIG. 5, a high pressure annular channel 75 is provided on the outer circumferential side of the high pressure valve 44 about the central axis Q of the hydraulic chamber 27. The high pressure annular channel 75 communicates with the high pressure hydraulic line 12 via the high-pressure communication passage 78 (see FIG. 2) including the second high-pressure passage 82.

With the annular high pressure annular channel 75 thus provided on the outer circumferential side of the high pressure valve 44 about the central axis Q of the hydraulic chamber 27, an attempt to achieve a symmetrical flow between the high pressure hydraulic line 12 and the hydraulic chamber 27 can be facilitated, whereby the loss and pressure fluctuation due to asymmetrical flow can be suppressed.

In the exemplary embodiment illustrated in FIG. 3 to FIG. 5, the low pressure valve seat 45 is flat, and the portion of the low pressure valve body 46 to be in contact with the low pressure valve seat 45 is a flat surface.

With the low pressure valve seat 45 being flat and the at least the portion of the low pressure valve body 46 to be in contact with the low pressure valve seat 45 being a flat surface as described above, even when the low pressure valve body 46 deforms, the level of the deformation (for example, a wear amount) is less likely to be uneven, whereby closing of the low pressure valve 42 can be more easily ensured.

The expressions used herein that mean relative or absolute arrangement, such as "in a direction", "along a direction", "in parallel with", "orthogonal to", "center", "concentrically", and "coaxial" mean not only exactly what they refer to but also such states that are relatively displaced with a tolerance or by an angle or distance that is small enough to achieve the same level of functionality.

For example, the expressions used herein that mean things are equivalent to each other, such as "the same", "equivalent", and "uniform", mean not only exactly equivalent states but also such states that have a tolerance or a difference that is small enough to achieve the same level of functionality.

For example, expressions that represent shapes, such as quadrangles and cylindrical shapes, mean not only what they refer to in a geometrically strict sense but also shapes having some irregularities, chamfered portions, or the like that can provide the same level of functionality.

The expressions "including", "comprising", and "provided with" one component are not exclusive expressions that exclude other components.

## Claims

1. A hydraulic machine (20), comprising:
a rotor shaft (21);
a cylinder (25) provided along a radial direction of the rotor shaft (21);
a piston (24) forming a hydraulic chamber (27) together with the cylinder (25), the piston (24) being configured to be guided by the cylinder (25) so as to be reciprocally movable along the radial direction in the cylinder (25);
a low pressure hydraulic line (14) and a high pressure hydraulic line (12) which are communicable with the hydraulic chamber (27);
a cam (22) disposed in a cam chamber (70) which is located on an inner side in the radial direction with respect to the cylinder (25), the cam (22) being configured to rotate together with the rotor shaft (21) in conjunction with a reciprocating motion of the piston (24);
a high pressure valve (44) disposed between the hydraulic chamber (27) and the high pressure hydraulic line (12) for switching a communication state between the hydraulic chamber (27) and the high pressure hydraulic line (12) by using a first electromagnet (60),
a low pressure valve (42) disposed between the hydraulic chamber (27) and the low pressure hydraulic line (14) for switching a communication state between the hydraulic chamber (27) and the low pressure hydraulic line (14) by using a second electromagnet (50) provided separately from the first electromagnet (60);
wherein the low pressure valve (42) has a low pressure valve body (46;46') disposed, on an inner side in the radial direction with respect to a high pressure valve body (56) of the high pressure valve (44), between the cylinder (25) and the low pressure hydraulic line (14)
**characterized in that**
the cam chamber (70) forms at least part of the low pressure hydraulic line (14).

2. The hydraulic machine (20) according to claim 1,
wherein the low pressure valve (42) includes a low pressure valve seat (45) on which the low pressure valve body (46;46') is to seat, and
wherein the low pressure valve body (46;46') is located farther in the radial direction from the cylinder (25) than the low pressure valve seat (45).

3. The hydraulic machine (20) according to claim 1 or 2, wherein the low pressure valve body (46;46') has an opening (47) for permitting working oil flowing between the high pressure valve (44) and the cylinder (25) to flow therethrough.

4. The hydraulic machine (20) according to claim 3, wherein the low pressure valve body (46;46') has a plurality of the openings (47) arranged so as to be symmetrical about a central axis (Q) of the hydraulic chamber (27).

5. The hydraulic machine (20) according to any one of claims 1 to 4, wherein the low pressure valve (42) includes the low pressure valve body (46;46') arranged coaxially with the high pressure valve body (56).

6. The hydraulic machine (20) according to any one of claims 1 to 5,
wherein the high pressure valve (44) includes a guide shaft (58) extending along the radial direction for guiding a movement of the high pressure valve body (56) in the radial direction,
wherein the low pressure valve (42) includes a valve stem (48) joined to the low pressure valve body (46;46') and extending in the radial direction, and
wherein the valve stem (48) of the low pressure valve (42) is inserted through a through-hole formed in the radial direction through the guide shaft (58) of the high pressure valve (44).

7. The hydraulic machine (20) according to any one of claims 1 to 6,
wherein the high pressure valve (44) includes the first electromagnet (60) configured to generate a magnetic force for driving the high pressure valve body (56), and
wherein the first electromagnet (60) is located farther in the radial direction from the cylinder (25) than the low pressure valve body (46;46') and the high pressure valve body (56) .

8. The hydraulic machine (20) according to claim 7,
wherein the high pressure valve (44) includes:
a high pressure valve seat (55) on which the high pressure valve body (56) is to seat; and
a first biasing member (62) for biasing the high pressure valve body (56) toward the high pressure valve seat (55), and
wherein the first electromagnet (60) is configured to drive the high pressure valve body (56) by the magnetic force against a biasing force of the first basing member (52).

9. The hydraulic machine (20) according to any one of claims 1 to 8,
wherein the low pressure valve (42) includes the second electromagnet (50) configured to generate a magnetic force for driving the low pressure valve body (46;46'), and
wherein the second electromagnet (50) is located farther in the radial direction from the cylinder (25) than the low pressure valve body (46;46') and the high pressure valve body (56) .

10. The hydraulic machine (20) according to claim 9,
wherein the low pressure valve (42) further includes a second biasing member (54) for biasing the low pressure valve body (46;46') toward a direction away from the low pressure valve seat (45), and
wherein the second electromagnet (50) is configured to drive the low pressure valve body (46;46') by the magnetic force against a biasing force of the second biasing member (54) .

11. The hydraulic machine (20) according to any one of claims 1 to 10,
wherein the high pressure valve (44) includes the first electromagnet (60) configured to generate a magnetic force for driving the high pressure valve body (56),
wherein the low pressure valve (42) includes the second electromagnet (50) configured to generate a magnetic force for driving the low pressure valve body (46;46'), and
wherein the first electromagnet (60) and the second electromagnet (50) are arranged along a central axis (Q) of the hydraulic chamber (27) in a position farther in the radial direction from the cylinder (25) than the low pressure valve body (46;46') and the high pressure valve body (56).

12. The hydraulic machine (20) according to claim 11, wherein the second electromagnet (50) is disposed farther in the radial direction from the cylinder (25) than the first electromagnet (60).

13. The hydraulic machine (20) according to any one of claims 1 to 12,
wherein the high pressure valve (44) includes the high pressure valve body (56) and a high pressure valve seat (55) on which the high pressure valve body (56) is to seat, and
wherein the high pressure valve body (56) is disposed farther in the radial direction from the cylinder (25) than the high pressure valve seat (55).

14. A renewable energy type power generating apparatus (1), comprising:
a rotor (3) configured to receive a renewable energy to rotate;
a hydraulic pump (8) configured to be driven by rotation of the rotor (3);
a hydraulic motor (10) configured to be driven by a pressurized oil generated by the hydraulic pump (8); and
an electric generator (16) configured to be driven by the hydraulic motor (10),
wherein at least one of the hydraulic pump (8) or the hydraulic motor (10) is the hydraulic machine (20) according to any one of claims 1 to 13,
wherein the high pressure hydraulic line (12) includes a high-pressure external pipe (11) which connects an outlet of the hydraulic pump (8) and an inlet of the hydraulic motor (10), and
wherein the low pressure hydraulic line (14) includes a low-pressure external pipe (13) which connects an outlet of the hydraulic motor (10) and an inlet of the hydraulic pump (8) .

## Patentansprüche

1. Eine hydraulische Maschine (20) mit:
einer Rotorwelle (21),
einem Zylinder (25), der entlang einer Radialrichtung der Rotorwelle (21) vorgesehen ist,
einem Kolben (24), der zusammen mit dem Zylinder (25) eine hydraulische Kammer (27) bildet, wobei der Kolben (24) ausgestaltet ist, um durch den Zylinder (25) so geführt zu werden, dass er entlang der Radialrichtung in dem Zylinder (25) hin-und-her bewegbar ist,
einer Niederdruck-Hydraulikleitung (14) und einer Hochdruck-Hydraulikleitung (12), die mit der hydraulischen Kammer (27) verbindbar sind,
einem Nocken bzw. einer Steuerkurve (22), die in einer Steuerkurvenkammer (70) angeordnet ist, die sich an einer inneren Seite in der Radialrichtung bezüglich dem Zylinder (25) befindet, wobei die Steuerkurve (22) ausgestaltet ist, um zusammen mit der Rotorwelle (21) in Verbindung mit einer Hin-und-Her-Bewegung des Kolbens (24) zu rotieren,
einem Hochdruckventil (44), das zwischen der hydraulischen Kammer (27) und der Hochdruck-Hydraulikleitung (12) zum Umschalten eines Verbindungszustands zwischen der hydraulischen Kammer (27) und der Hochdruck-Hydraulikleitung (12) unter Verwendung eines ersten Elektromagneten (60) angeordnet ist,
einem Niederdruckventil (42), das zwischen der hydraulischen Kammer (27) und der Niederdruck-Hydraulikleitung (14) zum Umschalten eines Verbindungszustands zwischen der hydraulischen Kammer (27) und der Niederdruck-Hydraulikleitung (14) durch Verwendung eines zweiten Elektromagneten (50), der separat von dem ersten Elektromagnet (60) vorgesehen ist, angeordnet ist,
wobei das Niederdruckventil (42) einen Niederdruck-Ventilkörper (46;46') besitzt, der an einer inneren Seite in der Radialrichtung bezüglich eines Hochdruck-Ventilkörpers (56) des Hochdruckventils (44) zwischen dem Zylinder (25) und der Niederdruck-Hydraulikleitung (14) angeordnet ist,
**dadurch gekennzeichnet, dass**
die Steuerkurvenkammer (70) zumindest einen Teil der Niederdruck-Hydraulikleitung (14) bildet.

2. Die hydraulische Maschine (20) gemäß Anspruch 1,
wobei das Niederdruckventil (42) einen Niederdruck-Ventilsitz (45) aufweist, auf dem der Niederdruck-Ventilkörper (46;46') sitzen kann, und
wobei der Niederdruck-Ventilkörper (46;46') sich weiter in der Radialrichtung von dem Zylinder (25) befindet als der Niederdruck-Ventilsitz (45).

3. Die hydraulische Maschine (20) gemäß Anspruch 1 oder 2, wobei der Niederdruck-Ventilkörper (46;46') eine Öffnung (47) besitzt, um Arbeitsöl, das zwischen dem Hochdruckventil (44) und dem Zylinder (25) strömt, durch dieses hindurch strömen zu lassen.

4. Die hydraulische Maschine (20) gemäß Anspruch 3, wobei der Niederdruck-Ventilkörper (46;46') eine Vielzahl der Öffnungen (47) hat, die so angeordnet sind, dass sie um eine zentrale Achse (Q) der hydraulischen Kammer (27) symmetrisch sind.

5. Die hydraulische Maschine (20) gemäß einem der Ansprüche 1 bis 4, wobei das Niederdruckventil (42) den Niederdruck-Ventilkörper (46;46') koaxial mit dem Hochdruck-Ventilkörper (56) angeordnet aufweist.

6. Die hydraulische Maschine (20) gemäß einem der Ansprüche 1 bis 5,
wobei das Hochdruckventil (44) einen Führungsschaft (58) aufweist, der sich entlang der Radialrichtung zum Führen einer Bewegung des Hochdruck-Ventilkörpers (56) in der Radialrichtung erstreckt,
wobei das Niederdruckventil (42) einen Ventilzapfen (48) aufweist, der mit dem Niederdruck-Ventilkörper (46;46') verbunden ist und sich in der Radialrichtung erstreckt, und
wobei der Ventilzapfen (48) des Niederdruckventils (42) durch ein Durchgangsloch eingesetzt ist, das in der Radialrichtung durch den Führungsschaft (58) des Hochdruckventils (44) ausgebildet ist.

7. Die hydraulische Maschine (20) gemäß einem der Ansprüche 1 bis 6,
wobei das Hochdruckventil (44) den ersten Elektromagnet (60) aufweist, der ausgestaltet ist, um eine Magnetkraft zum Antreiben des Hochdruck-Ventilkörpers (56) zu erzeugen, und
wobei der erste Elektromagnet (60) sich weiter in der Radialrichtung von dem Zylinder (25) befindet als der Niederdruck-Ventilkörper (46;46') und der Hochdruck-Ventilkörper (56).

8. Die hydraulische Maschine (20) gemäß Anspruch 7,
wobei das Hochdruckventil (44) aufweist:
einen Hochdruck-Ventilsitz (55), auf dem der Hochdruck-Ventilkörper (56) sitzen kann, und
ein erstes Vorbelastungselement (62) zum Vorbelasten des Hochdruck-Ventilkörpers (56) zu dem Hochdruck-Ventilsitz (55), und
wobei der erste Elektromagnet (60) ausgestaltet ist, um den Hochdruck-Ventilkörper (56) durch die Magnetkraft gegen eine Vorbelastungskraft des ersten Vorbelastungselements (52) anzutreiben.

9. Die hydraulische Maschine (20) gemäß einem der Ansprüche 1 bis 8,
wobei das Niederdruckventil (42) den zweiten Elektromagnet (50) aufweist, der ausgestaltet ist, um eine Magnetkraft zum Antreiben des Niederdruck-Ventilkörpers (46;46') zu erzeugen, und
wobei der zweite Elektromagnet (50) sich weiter in der Radialrichtung von dem Zylinder (25) als der Niederdruck-Ventilkörper (46;46') und der Hochdruck-Ventilkörper (56) befindet.

10. Die hydraulische Maschine (20) gemäß Anspruch 9,
wobei das Niederdruckventil (42) ferner ein zweites Vorbelastungselement (54) zum Vorbelasten des Niederdruck-Ventilkörpers (46;46') in einer Richtung weg von dem Niederdruck-Ventilsitz (45) aufweist, und
wobei der zweite Elektromagnet (50) ausgestaltet ist, um den Niederdruck-Ventilkörper (46;46') durch die Magnetkraft gegen eine Vorbelastungskraft des zweiten Vorbelastungselements (54) anzutreiben.

11. Die hydraulische Maschine (20) gemäß einem der Ansprüche 1 bis 10,
wobei das Hochdruckventil (44) den ersten Elektromagnet (60) aufweist, der ausgestaltet ist, um eine Magnetkraft zum Antreiben des Hochdruck-Ventilkörpers (56) zu erzeugen,
wobei das Niederdruckventil (42) den zweiten Elektromagnet (50) aufweist, der ausgestaltet ist, um eine Magnetkraft zum Antreiben des Niederdruck-Ventilkörpers (46;46') zu erzeugen, und
wobei der erste Elektromagnet (60) und der zweite Elektromagnet (50) entlang einer zentralen Achse (Q) der hydraulischen Kammer (27) in einer Position weiter in der Radialrichtung von dem Zylinder (25) als der Niederdruck-Ventilkörper (46;46') und der Hochdruck-Ventilkörper (56) angeordnet sind.

12. Die hydraulische Maschine (20) gemäß Anspruch 11, wobei der zweite Elektromagnet (50) weiter in der Radialrichtung von dem Zylinder (25) als der erste Elektromagnet (60) angeordnet ist.

13. Die hydraulische Maschine (20) gemäß einem der Ansprüche 1 bis 12,
wobei das Hochdruckventil (44) den Hochdruck-Ventilkörper (56) und einen Hochdruck-Ventilsitz (55), auf dem der Hochdruck-Ventilkörper (56) sitzen kann, aufweist, und
wobei der Hochdruck-Ventilkörper (56) weiter in der Radialrichtung von dem Zylinder (25) als der Hochdruck-Ventilsitz (55) angeordnet ist.

14. Eine Vorrichtung zum Erzeugen von Strom aus erneuerbarer Energie (1) mit:
einem Rotor (3), der ausgestaltet ist, um eine erneuerbare Energie zum Rotieren zu empfangen,
einer hydraulischen Pumpe (8), die ausgestaltet ist, um durch Rotation des Rotors (3) angetrieben zu werden,
einem hydraulischen Motor (10), der ausgestaltet ist, um durch ein mit der hydraulischen Pumpe (8) erzeugtes Drucköl angetrieben zu werden, und
einem elektrischen Generator (16), der ausgestaltet ist, um durch den hydraulischen Motor (10) angetrieben zu werden,
wobei die hydraulische Pumpe (8) und/oder der hydraulische Motor (10) die hydraulische Maschine (20) gemäß einem der Ansprüche 1 bis 13 ist,
wobei die Hochdruck-Hydraulikleitung (12) ein externes Hochdruckrohr (11) aufweist, das einen Auslass der hydraulischen Pumpe (8) und einen Einlass des hydraulischen Motors (10) verbindet, und
wobei die Niederdruck-Hydraulikleitung (14) ein externes Niederdruckrohr (13) aufweist, das einen Auslass des hydraulischen Motors (10) und einen Einlass der hydraulischen Pumpe (8) verbindet.

## Revendications

1. Machine (20) hydraulique, comprenant :
un arbre (21) de roue ;
un cylindre (25) prévu suivant une direction radiale de l'arbre (21) de la roue ;
un piston (24) formant une chambre (27) hydraulique ensemble avec le cylindre (25), le piston (24) étant configuré pour être guidé par le cylindre (25) de manière à aller et venir dans la direction radiale dans le cylindre (25);
une ligne (14) hydraulique basse pression et une ligne (12) hydraulique haute pression, qui peuvent communiquer respectivement avec la chambre (27) hydraulique;
une came (22) disposée dans une chambre (70) à came, qui est placée d'un côté intérieur dans la direction radiale par rapport au cylindre (25), la came (22) étant configurée pour tourner ensemble avec l'arbre (21) de la roue en conjonction avec un mouvement d'aller et retour du piston (24) ;
un robinet (44) haute pression, monté entre la chambre (27) hydraulique et la ligne (12) hydraulique haute pression, pour interrompre un état de communication entre la chambre (27) hydraulique et la ligne (12) hydraulique haute pression, en utilisant un premier électroaimant (60),
un robinet (42) basse pression, monté entre la chambre (27) hydraulique et la ligne (14) hydraulique basse pression, pour interrompre un état de communication entre la chambre (27) hydraulique et la ligne (14) hydraulique basse pression, en utilisant un deuxième électroaimant (50) prévu indépendamment du premier électroaimant (60);
dans laquelle le robinet (42) basse pression a un obturateur (46; 46') de robinet basse pression, disposé d'un côté intérieur dans la direction radiale par rapport à un obturateur (56) du robinet (44) haute pression entre le cylindre (25) et la ligne (14) hydraulique basse pression,
**caractérisée en ce que**
la chambre (70) à came forme au moins une partie de la ligne (14) hydraulique basse pression.

2. Machine (20) hydraulique suivant la revendication 1,
dans laquelle le robinet (42) basse pression comprend un siège (45) de robinet basse pression, sur lequel vient l'obturateur (46, 46') de robinet et
dans laquelle l'obturateur (46; 46') de robinet est, dans la direction radiale, placé plus loin du cylindre (25) que le siège (45) du robinet basse pression.

3. Machine (20) hydraulique suivant la revendication 1 ou 2, dans laquelle l'obturateur (46; 46') du robinet basse pression a une ouverture (47) pour permettre à de l'huile de travail, s'écoulant entre le robinet (44) haute pression et le cylindre (25), d'y passer.

4. Machine (20) hydraulique suivant la revendication 3, dans laquelle l'obturateur (46; 46') du robinet basse pression a une pluralité d'ouvertures (47), disposées de manière à être symétriques autour d'un axe (Q) central de la chambre (27) hydraulique.

5. Machine (20) hydraulique suivant l'une quelconque des revendications 1 à 4, dans laquelle le robinet (42) basse pression comprend l'obturateur (46; 46') de robinet basse pression, monté coaxialement à l'obturateur (56) du robinet haute pression.

6. Machine (20) hydraulique suivant l'une quelconque des revendications 1 à 5,
dans laquelle le robinet (44) haute pression comprend un arbre (58) de guidage s'étendant dans la direction radiale pour guider un déplacement de l'obturateur (56) du robinet haute pression dans la direction radiale,
dans laquelle le robinet (42) basse pression comprend une tige (48) de robinet jointe à l'obturateur (46; 46') du robinet basse pression et s'étendant dans la direction radiale et
dans laquelle la tige (48) du robinet (42) basse pression est insérée dans un trou traversant formé dans la direction radiale dans l'arbre (58) de guidage du robinet (44) haute pression.

7. Machine (20) hydraulique suivant l'une quelconque des revendications 1 à 6,
dans laquelle le robinet (44) haute pression comprend le premier électroaimant (60) configuré pour produire une force magnétique pour entraîner l'obturateur (56) du robinet haute pression et
dans laquelle le premier électroaimant (60) est, dans la direction radiale, placé plus loin du cylindre (25) que l'obturateur (46; 46') du robinet basse pression et l'obturateur (56) du robinet haute pression.

8. Machine (20) hydraulique suivant la revendication 7,
dans laquelle le robinet (44) haute pression comprend :
un siège (55) de robinet haute pression sur lequel vient l'obturateur (56) du robinet haute pression et
un premier élément (62) de poussée pour pousser l'obturateur (56) du robinet haute pression vers le siège (55) du robinet haute pression et
dans lequel le premier électroaimant (60) est configuré pour entraîner l'obturateur (56) du robinet haute pression par la force magnétique à l'encontre d'une force de poussée du premier élément (52) de poussée.

9. Machine (20) hydraulique suivant l'une quelconque des revendications 1 à 8,
dans laquelle le robinet (42) basse pression comprend le deuxième électroaimant (50) configuré pour produire une force magnétique pour entraîner l'obturateur (46; 46') du robinet basse pression et
dans laquelle le deuxième électroaimant (50) est, dans la direction radiale, placé plus loin du cylindre (25) que l'obturateur (46; 46') du robinet basse pression et l'obturateur (56) du robinet haute pression.

10. Machine (20) hydraulique suivant la revendication 9,
dans laquelle le robinet (42) basse pression comprend, en outre, un deuxième élément (54) de poussée pour pousser l'obturateur (46; 46') du robinet basse pression dans une direction l'éloignant du siège (45) du robinet basse pression et
dans laquelle le deuxième électroaimant (50) est configuré pour entraîner l'obturateur (46; 46') du robinet basse pression par la force magnétique à l'encontre d'une force de poussée du deuxième élément (54) de poussée.

11. Machine (20) hydraulique suivant l'une quelconque des revendications 1 à 10,
dans laquelle le robinet (44) haute pression comprend le premier électroaimant (60) configuré pour produire une force magnétique pour entraîner l'obturateur (56) du robinet haute pression,
dans laquelle le robinet (42) basse pression comprend le deuxième électroaimant (50) configuré pour produire une force magnétique pour entraîner l'obturateur (46; 46') du robinet basse pression et
dans laquelle le premier électroaimant (60) et le deuxième électroaimant (50) sont disposés suivant un axe (Q) central de la chambre (27) hydraulique dans une position, dans la direction radiale, plus loin du cylindre (25) que l'obturateur (46; 46') du robinet basse pression et l'obturateur (56) du robinet haute pression.

12. Machine (20) hydraulique suivant la revendication 11,
dans laquelle le deuxième électroaimant (50) est, dans la direction radiale, disposé plus loin du cylindre (25) que le premier électroaimant (60).

13. Machine (20) hydraulique suivant l'une quelconque des revendications 1 à 12,
dans laquelle le robinet (44) haute pression comprend l'obturateur (56) du robinet haute pression et un siège (55) du robinet haute pression sur lequel vient l'obturateur (56) du robinet haute pression et
dans laquelle l'obturateur (56) du robinet haute pression est, dans la direction radiale, disposé plus loin du cylindre (25) que le siège (55) du robinet haute pression.

14. Installation (1) de production de courant électrique de type à énergie renouvelable, comprenant :
une roue (3) configurée pour recevoir une énergie renouvelable, afin de tourner ;
une pompe (8) hydraulique configurée pour être entraînée par la rotation de la roue (3) ;
un moteur (10) hydraulique configuré pour être entraîné par une huile sous pression produite par la pompe (8) hydraulique et
une génératrice (16) électrique configurée pour être entraînée par le moteur (10) hydraulique,
dans laquelle au moins l'un de la pompe (8) hydraulique ou du moteur (10) hydraulique est la machine (20) hydraulique suivant l'une quelconque des revendications 1 à 13,
dans laquelle la ligne (12) hydraulique haute pression comprend un conduit (11) extérieur haute pression, qui relie une sortie de la pompe (8) hydraulique et une entrée du moteur (10) hydraulique et
dans laquelle la ligne (14) hydraulique basse pression comprend un conduit (13) extérieur basse pression, qui relie une sortie du moteur (10) hydraulique et une entrée de la pompe (8) hydraulique.
